# EUROPEAN PATENT APPLICATION

(11) **EP 4 729 802 A1**
(43) Date of publication of application: **22.04.2026**
(21) Application number: 25203348.5
(22) Date of filing: 19.09.2025
(51) Int. Cl.: F16G 13/06

(54) **OFFSET PLATE AND JOINT LINK**

(30) Priority: 17.10.2024 JP 2024182055
(71) Applicant: Daido Kogyo Co., Ltd., Kaga-shi, Ishikawa 922-8686 (JP)
(72) Inventor: MISHIMA, Tomoki, Kaga-shi, Ishikawa, 922-8686 (JP); YAMAMOTO, Toshihiro, Kaga-shi, Ishikawa, 922-8686 (JP)
(74) Representative: TBK

(57) **Abstract**

An offset plate 3 includes an outer plate section 31 including a pin hole 34 to be press-fitted with a pin 41 and an inner plate section 32 including a bush hole 35 to be press-fitted with a bush 42, and an offset section 33 joining the outer plate section 31 and the inner plate section 32 in an offset in an axial direction AX. The offset plate 3 has an outline including a pair of parallel line portions 301 extending in parallel to a pitch line PL connecting a center Oa of the pin hole 34 and a center Ob of the bush hole 35, the pitch line PL being between the pair of parallel line portions 301 in view of the axial direction AX. The pair of parallel line portions 301 reach through the offset section 33 to at least a part of each of the outer plate section 31 and the inner plate section 32.

## Description

### Field of the Invention

The present invention relates to an offset plate to be used in a joint link connecting opposite ends of a linear chain to make an endless chain, and a joint link.

### Background Art

There has been conventionally known an endless chain for power transmission in which outer links each having a pair of outer plates joining each other by a pin are alternately connected with inner links each having a pair of inner plates joining each other by a bush with the pin passing through the bush. An endless chain is made by connecting opposite ends of a linear chain via a joint link. Japanese Unexamined Utility Model Publication No. SHO 57-176948 discloses an exemplary joint link by use of offset plates. The offset plate includes an outer plate section including a pin hole and an inner plate section including a bush hole, and an offset section joining the inner and outer plate sections in an offset.

When a chain is tensioned for drive, a tensile force acts on the outer plate section and the inner plate section of the offset plate. Consequently, a stress concentrates in the offset section joining the inner and outer plate sections. At the same time, a bending force bending the outer plate section inward occurs. There is the likelihood that a fracture happens in or near the offset section of an offset plate due to these forces at an early stage in operation.

### Summary of the Invention

An object of the present invention is to provide an offset plate that can prevent an early fracture and a joint link for chain utilizing the offset plate.

An offset plate according to an aspect of the present invention is used in a joint link connecting the opposite ends of a linear chain to make an endless chain, and includes: an outer plate section including a pin hole to be press-fitted with a pin; an inner plate section including a bush hole to be press-fitted with a bush; and an offset section joining the outer plate section and the inner plate section in an offset in an axial direction of the pin hole and the bush hole, wherein the offset plate has an outline including a pair of parallel line portions extending in parallel to a pitch line connecting a center of the pin hole and a center of the bush hole, the pitch line being between the pair of parallel line portions in view of the axial direction, and the pair of parallel line portions reach through the offset section to at least a part of each of the outer plate section and the inner plate section.

### Brief Description of the Drawings

FIG. 1A is a partially cutout front view showing a sealed chain using a joint link according to an embodiment of the present invention, and FIG. 1B is a side view thereof.
FIG. 2 is a partially cutout front view of a joint link using offset plates according to the embodiment of the present invention.
FIG. 3A and FIG. 3B are perspective views of the offset plate according to the embodiment.
FIG. 4A is one side view of the offset plate, FIG. 4B is a front view thereof and FIG. 4C is an other side view thereof.
FIG. 5 is a diagram explaining a bending occurring in the offset plate when a tensile force acts on the joint link.
FIG. 6A is a side view of an offset plate as a comparative example. FIG. 6B is a front view showing a state of fracture in a joint link using the offset plate as the comparative example.
FIG. 7 is a perspective view showing an offset plate according to a first modification.
FIG. 8 is a side view showing an offset plate according to a second modification.

### Description of Embodiments

Hereinafter, an embodiment of the present invention will be described in detail with reference to the drawings. An offset joint link using an offset plate according to the present invention is used to make an endless chain by connecting the opposite ends of a linear chain body in which inner links and outer links are alternately connected with one another. The offset joint link is used in a case that the total number of inner and outer links forming a chain body is an odd number. Use of the offset joint link enables a minute adjustment of a chain length. For example, the chain is a power transmission chain for use in a drive power transmission mechanism provided in transporting vehicles such as a two-wheeled vehicle or industrial machines. In the following embodiment, description is made about a sealed chain in which lubricant is interposed between a bush and a pin connecting an inner link and an outer link, and is sealed by a sealing member.

### [General configuration of sealed chain]

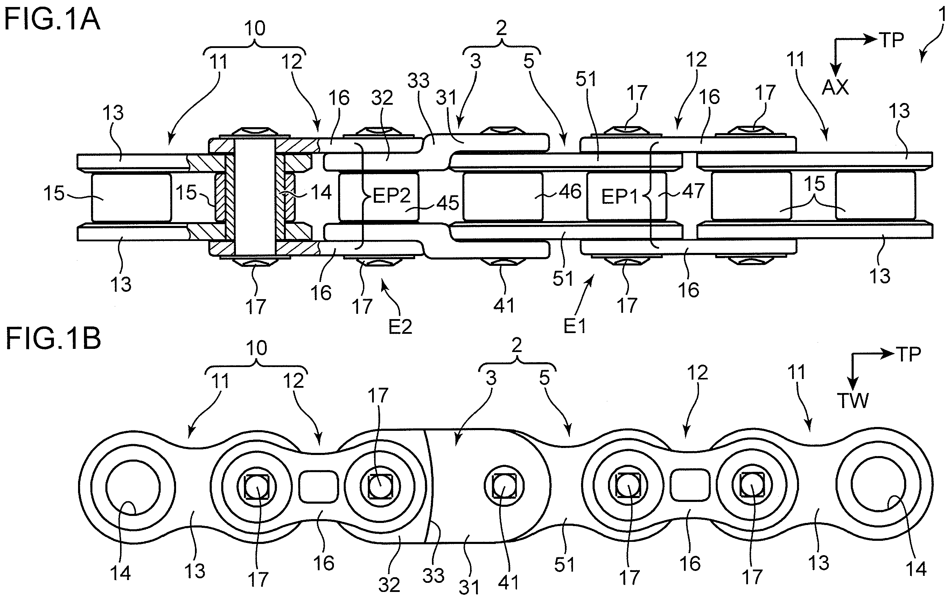

FIG. 1A is a front view showing a sealed chain 1 using a joint link according to the embodiment of the present invention, and FIG. 1B is a side view thereof. The sealed chain 1 includes a linear chain body 10, and an offset joint link 2 connecting one end and the opposite end of the chain body 10. The chain body 10 has an endless structure in which a plurality of inner links 11 and a plurality of outer links 12 are alternately connected with each other. Each of the inner links 11 includes a pair of inner plates 13, a pair of bushes 14, and a pair of rollers 15. Each of the outer links 12 includes a pair of outer plates 16 and a pair of pins 17. FIG. 1A and FIG. 1B, and subsequent several figures are added with indications of directions, i.e., a chain pitch direction TP which is an extension direction of the sealed chain 1, an axial direction AX of the pin connecting the inner link and the outer link, and a chain width direction TW.

Each of the pair of inner plates 13 is an elongated plate in the chain pitch direction TP and is in the shape of an ellipse having concaves in a longitudinally middle portion in the side view. The pair of inner plates 13 are arranged in parallel to each other. The inner plate 13 is formed with a bush hole allowing a bush 14 to pass therethrough in each of longitudinally one end portion and the other end portion. The bush 14 has opposite ends press-fitted in the bush holes to thereby join the pair of inner plates 13. The bush 14 includes a through hole allowing the pin 17 to pass therethrough. The roller 15 is rotatably arranged around the bush 14 between the pair of inner plates 13.

Each of the pair of outer plates 16 is an elongated plate in the chain pitch direction TP and is in the shape of an ellipse having concaves in a longitudinally middle portion in the side view. The pair of outer plates 16 are arranged in parallel to each other, and the inner link 11 is therebetween. The outer plate 16 is formed with a pin hole in each of longitudinally one end portion and the other end portion. Each of the pair of pins 17 has opposite ends press-fitted in the respective pin holes and fixedly crimped to thereby join the pair of outer plates 16. The opposite ends of the pin 17 are fixedly placed in the pin holes in the state that the pin 17 passes through the bush 14. The pins 17 passing through the bushes 14 alternately connect the inner links 11 and the outer links 12. As shown in FIG. 1B, the outer plate 16 has a size smaller than the inner plate 13. Specifically, the outer plate 16 is smaller than the inner plate 13 in aspect of the diameter of an arc portion at each of longitudinally opposite ends. Also, the outer plate 16 is smaller than the inner plate 13 in aspect of the concave size in the middle portion in the chain width direction TW.

Lubricant, e.g., grease, is placed between the pin 17 and the bush 14 which are in a shaft and bearing relation. The placement of the lubricant reduces the friction between the pin 17 and the bush 14, thereby making the bending movement of the sealed chain 1 smooth, and suppressing the wear of the pin 17 and the bush 14. An unillustrated sealing member is arranged in the opposite ends of the bush 14 to encapsulate the lubricant between the pin 17 and the bush 14. The sealing member is a ring seal made of rubber, for example. The sealing member is arranged on the outer periphery of the bush 14 between the inner plate 13 and the outer plate 16.

The offset joint link 2 is a connecting member for connecting one chain end portion E1 and the other chain end portion E2 of the linear chain body 10 to make an endless sealed chain 1. The chain end portion E1 and the chain end portion E2 are respectively on longitudinal one ends of pairs of outer plates 16 that are end plates EP1 and end plates EP2. The offset joint link 2 connects the end plate EP1 and the end plate EP2.

### [Overall Configuration of Offset Joint Link]

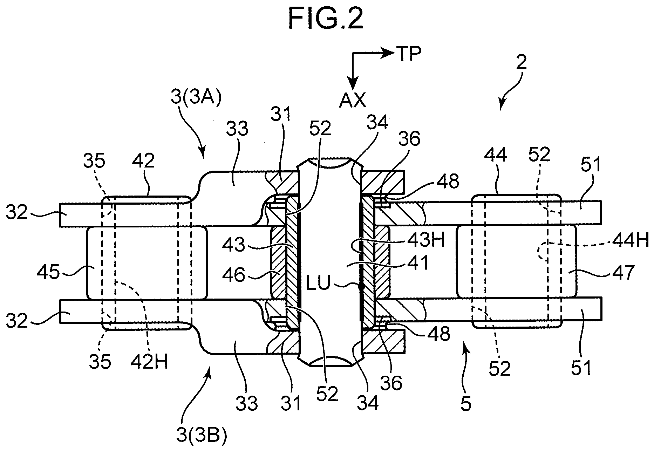

FIG. 2 is a partially cutout front view of the offset joint link 2. The offset joint link 2 includes a pair of offset plates 3, a joint pin 41, a first bush 42, a second bush 43, a third bush 44, a first roller 45, a second roller 46, a third roller 47, a sealing member 48, and a joint inner link 5.

The pair of offset plates 3 include a first offset plate 3A and a second offset plate 3B that are in parallel to each other. The first offset plate 3A and the second offset plate 3B have the same shape. In the description hereinafter, when there is no need to distinguish the plate 3A and the plate 3B from each other, each of them is simply called as the offset plate 3.

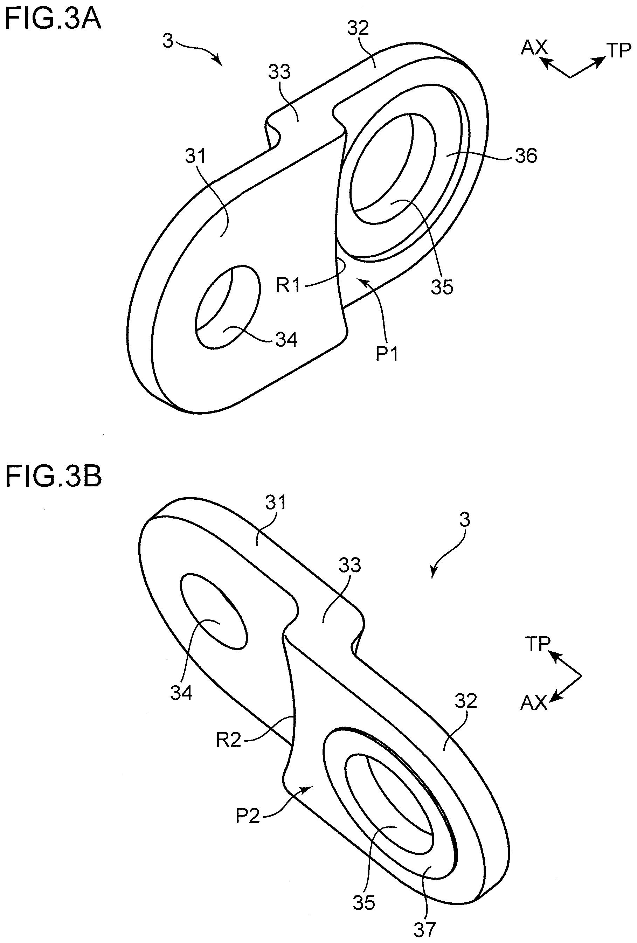

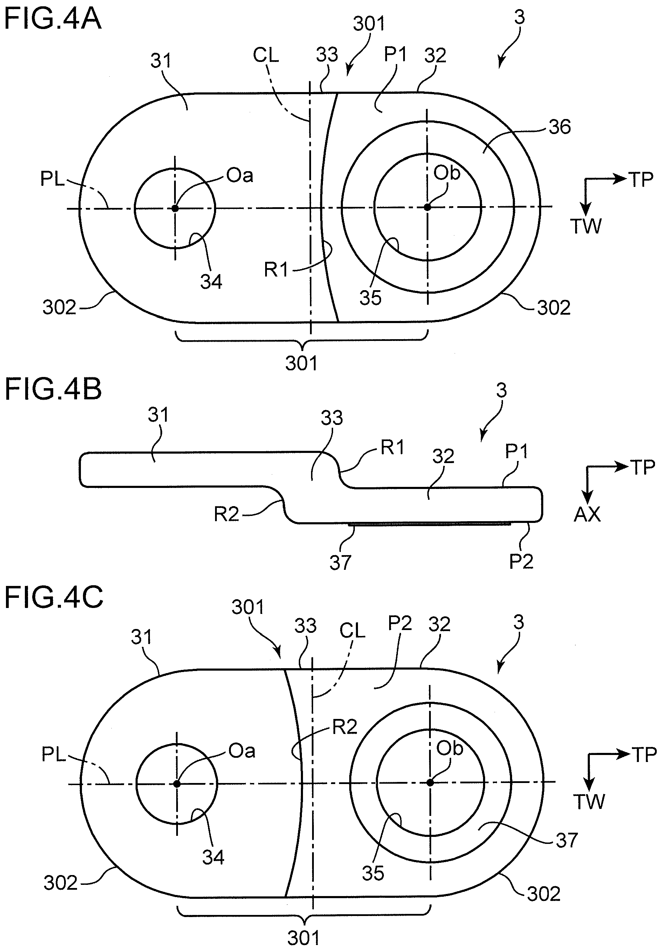

The offset plate 3 includes an outer plate section 31, an inner plate section 32, and an offset section 33. The outer plate section 31 includes a pin hole 34 to be press-fitted with the joint pin 41. The inner plate section 32 includes a bush hole 35 to be press-fitted with the first bush 42. The offset section 33 joins the outer plate section 31 and the inner plate section 32 in an offset in the axial direction AX of the pin hole 34 and the bush hole 35. Shape features of the offset plate 3 are described later in detail with reference to FIG. 3 and FIG. 4.

The first offset plate 3A and the second offset plate 3B are arranged opposite to each other, and respective offset directions of the outer plate sections 31 are opposite to each other. In the arrangement, a distance between the pair of outer plate sections 31 in the axial direction AX is longer than a distance between the pair of inner plate sections 32. One end of the joint inner link 5 is disposed between the pair of outer plate sections 31. In other words, the pair of outer plate sections 31 and the joint inner link 5 are connected in a state where the one end of the joint inner link 5 is sandwiched between the outer plate sections 31.

The joint inner link 5 connects the one chain end portion E1 of the chain body 10 and the offset plates 3. The joint inner link 5 has the same structure as the inner link 11 of the chain body 10, and includes a pair of inner plates 51 arranged in parallel. The pair of inner plates 51 are joined by the second bush 43 and the third bush 44 that are connectors. The pair of inner plates 51 are joined by the second bush 43 on one end and by the third bush 44 on the other end in the chain pitch direction TP. Each of the pair of inner plates 51 is formed with two bush holes 52 to be respectively press-fitted with the second bush 43 and the third bush 44.

The joint pin 41 joins the pair of outer plate sections 31 and connects the offset plates 3 and the joint inner link 5. The joint pin 41 passes through the pair of outer plate sections 31 and the joint inner link 5 in the axial direction AX. The joint pin 41 has one end in the axial direction AX that is inserted in a pin hole 34 of the first offset plate 3A and the other end that is press-fitted in a pin hole 34 of the second offset plate 3B. The opposite ends are fixedly crimped.

The first bush 42 joins the pair of inner plate sections 32. The first bush 42 has one end in the axial direction AX that is press-fitted in a bush hole 35 of the first offset plate 3A and the other end that is press-fitted in a bush hole 35 of the second offset plate 3B. The first bush 42 includes a first through hole 42H allowing a pin 17 arranged in the other chain end portion E2 of the chain body 10 to pass therethrough. The first roller 45 is rotatably arranged around the first bush 42 between the pair of inner plate sections 32.

The second bush 43 includes a second through hole 43H allowing the joint pin 41 to pass therethrough. The second bush 43 has one end and the other end in the axial direction AX that are respectively press-fitted in bush holes 52 of the pair of inner plates 51 constituting the joint inner link 5. The second bush 43 is arranged around the joint pin 41 and is rotatable around the joint pin 41. Lubricant LU, e.g., grease, is placed between a peripheral surface of the joint pin 41 and an inner surface of the second through hole 43H. The second roller 46 is arranged around the second bush 43 as being arranged between the pair of inner plates 51.

The third bush 44 includes a third through hole 44H allowing the pin 17 arranged in the one chain end portion E1 of the chain body 10 to pass therethrough. The third bush 44 has one end and the other end in the axial direction AX that are respectively press-fitted in bush holes 52 of the pair of inner plates 51. The third roller 47 is arranged around the third bush 44 as being arranged between the pair of inner plates 51.

The sealing member 48 seals the lubricant LU placed on the peripheral surface of the joint pin 41. The sealing member 48 is arranged around the one end and the other end of the joint pin 41 in the axial direction AX between the outer plate section 31 and the inner plate 51 of the joint inner link 5. In FIG. 1A, the sealing member 48 is not shown. The sealing member 48 prevents the leakage of the lubricant LU placed between the joint pin 41 and the second bush 43. Although not shown in FIG. 2, a sealing member 48 is arranged in each of the first bush 42 and the third bush 44.

### [Detailed Configuration of Offset Plate]

FIG. 3A and FIG. 3B are perspective views of the offset plate 3 from two different directions. FIG. 4A is one side view of the offset plate 3, FIG. 4B is a front view thereof, FIG. 4C is an other side view thereof. The offset plate 3 includes the outer plate section 31 and the inner plate section 32, that are juxtaposed in the chain pitch direction TP in an offset in the axial directions AX, and the offset section 33 that joins the outer plate section 31 and the inner plate section 32.

The inner plate section 32 has a first surface P1 that is on a plane facing in an offset direction of the outer plate section 31 and a second surface P2 that is on a plane facing in a direction opposite to the first surface P1. The first surface P1 and the second surface P2 are on parallel planes. Similarly, the outer plate section 31 has two surfaces in parallel to each other. The bush hole 35 penetrates from the first surface P1 to the second surface P2 of the inner plate section 32 in the axial direction AX. The pin hole 34 penetrates the outer plate section 31 in the axial direction AX. In the description below, a line connecting a center Oa of the pin hole 34 and a center Ob of the bush hole 35 is called as a pitch line PL. An extension direction of the pitch line PL agrees with the chain pitch direction TP.

FIG. 4A and FIG. 4C show outlines of the offset plate 3 in respective side views, i.e., the outlines in view of the respective axial directions AX. The offset plate 3 has an elliptical shape whose longitudinal direction is on the extension direction of the pitch line PL. The offset plate 3 has a pair of parallel line portions 301 opposite to each other in the chain width direction TW and a pair of arc portions 302 opposite to each other in the chain pitch direction TP.

The pair of parallel line portions 301 extend in parallel to the pitch line PL extending therebetween. The pair of arc portions 302 are arranged at each of longitudinally opposite ends of the offset plate 3 and have a semicircular shape. The pair of parallel line portions 301 extend over the outer plate section 31, the offset section 33, and the inner plate section 32, excluding the pair of arc portions 302. Generally, the pair of parallel line portions 301 extend from the center Oa of the pin hole 34 to the center Ob of the bush hole 35, and the arc portions 302 respectively extend outward from the centers Oa, Ob.

The pair of parallel line portions 301 are not required to extend over the entire sections excluding the pair of arc portions 302, but may extend only over parts crossing the offset section 33. In other words, the pair of parallel line portions 301 may reach through the offset section 33 to at least a part of each of the outer plate section 31 and the inner plate section 32. Further, the pair of parallel line portions 301 may not have an outline strictly in parallel to the pitch line PL, but may have an outline slightly sloping or an outline including a slightly upward curve or downward curve as long as being substantially parallel.

With reference to FIG. 4B, an offset amount of the outer plate section 31 from the inner plate section 32 in the axial direction AX is substantially a thickness of the inner plate section 32. The offset section 33 connects the step between the outer plate section 31 and the inner plate section 32 according to the offset amount. As shown in FIG. 4A, the offset section 33 is on the bush hole 35 side over the first surface P1 with respect to a centerline CL that longitudinally divides the offset plate 3 into two, and includes a first curved surface R1 moderately swelling toward the pin hole 34. On the other hand, as shown in FIG. 4C, the offset section 33 is on the pin hole 34 side over the second surface P2 with respect to the centerline CL, and includes a second curved surface R2 moderately swelling toward the bush hole 35.

As shown in FIG. 3A, a recess for a seal seat 36 is formed in the first surface P1 of the inner plate section 32. The seal seat 36 is an annular recess concentric with the bush hole 35. The seal seat 36 receives a sealing member encapsulating the lubricant between the first bush 42 and the pin 17 placed in the first bush 42. FIG. 2 shows a seal seat 36 formed in the inner plate 51 of the joint inner link 5 having the same function as the inner plate section 32. In other words, a sealing member similar to the sealing member 48 is placed in the seal seat 36 shown in FIG. 3A.

As shown in FIG. 3B, an annular protrusion 37 protrudes from the second surface P2 of the inner plate section 32. The annular protrusion 37 is an example of the thick part protruding in the axial direction AX around the bush hole 35. The provision of the annular protrusion 37 as the thick part can increase the stiffness of the offset plate 3. Since the annular protrusion 37 protrudes only a little but annularly, the annular protrusion 37 can increase the stiffness along the entire periphery of the bush hole 35.

### [Fracture Resistance of Offset Plate]

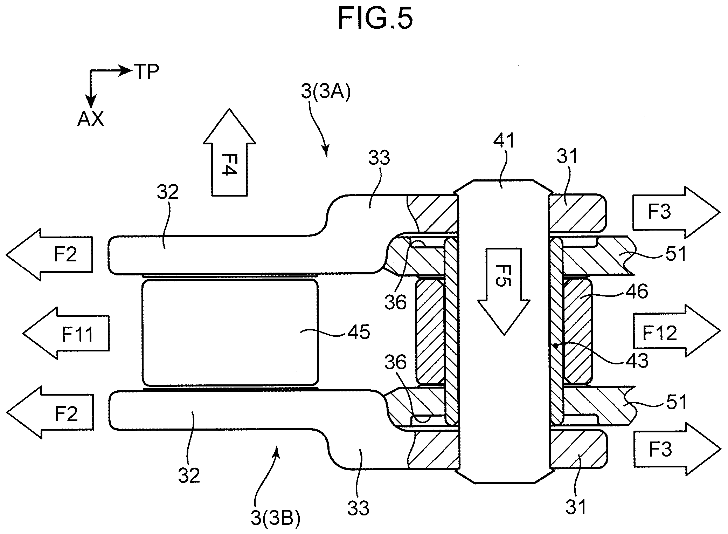

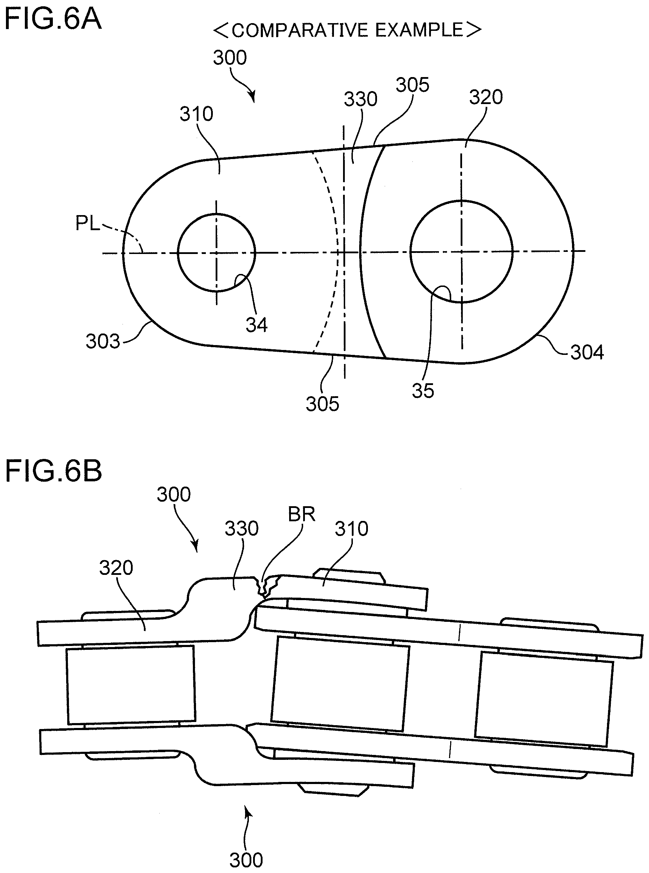

The offset plate 3 of the embodiment having the configuration described above has an excellent fracture resistance. This point is described with reference to FIG. 5, and FIG. 6 showing a comparative example. FIG. 5 is a diagram showing bending forces F4, F5 generated in the offset plate 3 when a tensile force acts on the offset joint link 2 in the chain pitch direction TP.

The sealed chain 1 is wrapped around a driving sprocket of an engine and a driven sprocket of a rear wheel of a motorcycle, for example. When the sealed chain 1 is driven, a tension is applied to the sealed chain 1 via the first roller 45 and the second roller 46. In other words, as shown by arrows in FIG. 5, a tensile force F11 in one chain pitch direction TP acts on the first roller 45, and a tensile force F12 in a direction opposite to the direction of the tensile force F11 acts on the second roller 46.

When the tensile force F11 acts on the first roller 45, a tensile force F2 acts on the pair of inner plate sections 32 in the same direction as the tensile force F11. Further, when the tensile force F12 acts on the second roller 46, a tensile force F3 respectively acts on the pair of outer plate sections 31 in the same direction as the tensile force F12. The outer plate sections 31 and the inner plate sections 32 are respectively subject to the tensile forces F2 and F3 that are in the opposite directions, and a stress concentrates in the offset section 33 where the shape of the offset plate 3 changes in the axial direction AX.

Further, when the tensile force F11 acts on the first roller 45, the tensile force F11 acts on the first bush 42 surrounded by the first roller 45. This causes the first bush 42 to slightly bend in the acting direction of the tensile force F11. This bending consequently generates a bending force F4 to bend the inner plate section 32 outward in the axial direction AX. In addition, a bending force F5 of bending the outer plate section 31 inward in the axial direction AX generates as a counterforce to the bending force F4. FIG. 5 shows the bending forces F4 and F5 acting on the first offset plate 3A. The same bending forces act on the second offset plate 3B. The tensile forces F2 and F3, and the bending forces F4 and F5 are liable to develop a force causing a fracture in or near the offset section 33.

FIG. 6A is a side view of an offset plate 300 as the comparative example. FIG. 6B is a front view showing a state of fracture in a joint link using the offset plate 300 as the comparative example. The offset plate 300 includes an outer plate section 310, an inner plate section 320, and an offset section 330. The offset plate 300 has an outline including a small arc portion 303 and a large arc portion 304, which are at each of longitudinally opposite ends thereof, and a tapered portion 305 that is between the small arc portion 303 and the large arc portion 304 in view of the axial direction AX.

The small arc portion 303 is provided on an end of the outer plate section 310 and is concentric with the pin hole 34. The large arc portion 304 is provided on an end of the inner plate section 320 and is concentric with the bush hole 35. The tapered portion 305 has a linear shape to connect the small arc portion 303 and the large arc portion 304 which makes a diameter difference. The tapered portion 305 has an outline including a pair of sloping lines each having a gradient with respect to the pitch line PL.

However, in the shape including the tapered portion 305 whose widthwise size decreases from the inner plate section 320 to the outer plate section 310 and the offset section 330 being arranged in a middle of the tapered portion 305, a stress is liable to concentrate in the offset section 330. In particular, a stress concentration area is liable to occur in the outer plate section 310 side of the offset section 330 where the widthwise reduction starts. Accordingly, it can be seen that there is a likelihood that a fracture BR occurs in or near the offset section 330 at a relatively early stage as shown in FIG. 6B when the tensile forces F2 and F3 and the bending forces F4 and F5 act on the offset plate 300 as shown in FIG. 5.

In contrast, the offset plate 3 of the embodiment has the shape in which the pair of parallel line portions 301 extend in parallel to the pitch line PL and reach from the inner plate section 32 through the offset section 33 to the outer plate section 31. In other words, in the offset plate 3, the outer plate section 31 and the inner plate section 32 lying on both sides of the offset section 33 include the parts having the same size in the chain width direction TW as each other. This can disperse a stress liable to occur in or near the offset section 33 connecting the outer plate section 31 and the inner plate section 32 when the sealed chain 1 is driven, thereby reducing the stress. In other words, the stress concentration in the offset section 33 is suppressed, thereby keeping a fracture from occurring in or near the offset section 33. Consequently, an early fracture of the offset plate 3 can be prevented.

In particular, the pair of parallel line portions 301 of the offset plate 3 extend over the outer plate section 31, the offset section 33, and the inner plate section 32, excluding the arc portions 302 at the longitudinally opposite ends of the offset plate 3. Therefore, in the offset plate, the outer plate section 31, the offset section 33, and the inner plate section 32 have the same width throughout the entire length except for the arc portions 302. This enhances the dispersion of stress in the offset section 33, thereby further preventing the fracture of the offset plate 3 due to stress concentration.

### [Modifications]

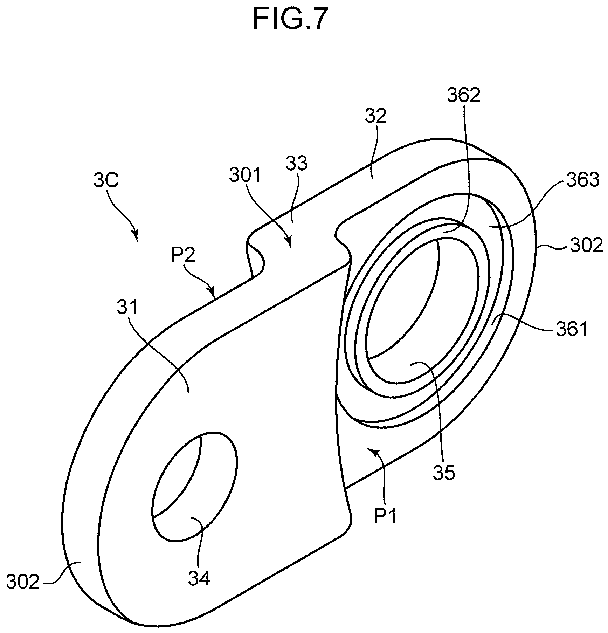

FIG. 7 is a perspective view showing an offset plate 3C according to a first modification. The offset plate 3C has a structure different from the seal seat 36 of the offset plate 3 that is exemplified in FIG. 3A as the part accommodating the sealing member 48. Since the other configuration of the offset plate 3C is identical to the offset plate 3 described above, the description thereof is omitted.

The offset plate 3C includes an inner plate section 32 having a surrounding wall 361, a protrusion 362, and a seal groove 363 on a first surface P1. The surrounding wall 361 is a cylindrical wall that defines an annular recess around a bush hole 35. An inner diameter of the surrounding wall 361 is set to a size slightly larger than an outer diameter of the sealing member 48. The protrusion 362 is a cylindrical wall protruding in the axial direction AX on the periphery of the bush hole 35 from the recess defined by the surrounding wall 361. The protrusion 362 has an end surface at the same height position as the first surface P1. The seal groove 363 is an annular groove defined between the surrounding wall 361 and the protrusion 362.

In the offset plate 3C according to the first modification, the surrounding wall 361 defining the annular recess around the bush hole 35 and the protrusion 362 protruding on the periphery of the bush hole 35 form the seal groove 363 that is an annular groove. The sealing member 48 is placed in the seal groove 363, so that the surrounding wall 361 supports its outer side and the protrusion 362 supports its inner side. Thus, the sealing member 48 can be stably seated around the bush hole 35. Further, the provision of the protrusion 362 on the periphery of the bush hole 35 enhances the stiffness of preventing the inner plate section 32 from bending. Additionally, the provision of the protrusion 362 increases the thickness in the peripheral portion of the bush hole 35 in the axial direction, thereby increasing the fitting dimension of the second bush 43, and consequently giving rise to the advantageous effect of increasing the chain strength.

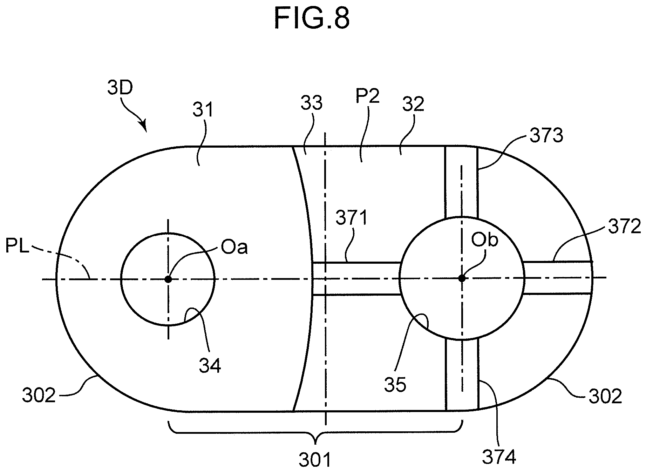

FIG. 8 is a side view showing an offset plate 3D according to a second modification. The offset plate 3 described above includes the annular protrusion 37 as an example of the thick part formed on the second surface P2 of the inner plate section 32. The offset plate 3D includes a plurality of ribs as a thick part, i.e., a first rib 371, a second rib 372, a third rib 373, and a fourth rib 374. The configuration of the offset plate 3D is identical to the offset plate 3, excluding the ribs.

The four ribs 371, 372, 373, and 374 are strip-like protrusions protruding in the axial direction AX of a bush hole 35, and extend radially outward from the periphery of the bush hole 35. One pair of ribs, i.e., the first rib 371 and the second rib 372, extend from the bush hole 35 in the opposite directions along the pitch line PL. The other pair of ribs, i.e., the third rib 373 and the fourth rib 374, extend from the bush hole 35 in the opposite directions along a line that is orthogonal to the pitch line PL and passes through a bush hole center Ob.

In the offset plate 3D according to the second modification, the provision of the ribs 371, 372, 373, and 374 on a second surface P2 of an inner plate section 32 can increase the stiffness of a part near the bush hole 35. In particular, the provision of the first rib 371 and the second rib 372 along the pitch line PL enables the offset plate 3D to effectively endure against a bending force caused by the tensile forces occurring when a sealed chain 1 is driven.

The embodiment and the modifications described above encompass the following inventions.

An offset plate according to an aspect of the present invention is used in a joint link connecting the opposite ends of a linear chain to make an endless chain, and includes: an outer plate section including a pin hole to be press-fitted with a pin; an inner plate section including a bush hole to be press-fitted with a bush; and an offset section joining the outer plate section and the inner plate section in an offset in an axial direction of the pin hole and the bush hole, wherein the offset plate has an outline including a pair of parallel line portions extending in parallel to a pitch line connecting a center of the pin hole and a center of the bush hole, the pitch line being between the pair of parallel line portions in view of the axial direction, and the pair of parallel line portions reach through the offset section to at least a part of each of the outer plate section and the inner plate section.

In this configuration, the offset plate has a shape where the pair of parallel line portions extending in parallel to the pitch line reach through the offset section to at least a part of each of the outer plate section and the inner plate section. In other words, in the offset plate, the outer plate section and the inner plate section, which have the offset section therebetween, include the respective parts having the same width. This can disperse a stress liable to occur in or near the section joining the outer plate section and the inner plate section when the chain is driven, thereby reducing the stress. In other words, the stress concentration in the joining section is suppressed, thereby further keeping a fracture from occurring in or near the offset section. Consequently, an early fracture of the offset plate can be prevented.

It may be appreciated that, in the offset plate, the offset plate has a shape having a longitudinal direction on an extension direction of the pitch line, the offset plate further includes an arc portion at each of longitudinally opposite ends thereof, and the pair of parallel line portions extend over the outer plate section, the offset section, and the inner plate section, excluding the arc portions.

In this configuration, the outer plate section, the offset section, and the inner plate section of the offset plate have the same width throughout the entire length excluding the arc portions at the longitudinally opposite ends of the offset plate. This enhances the dispersion of stress, thereby further suppressing the fracture of the offset plate due to stress concentration.

It may be appreciated that in the offset plate, the inner plate section has a first surface facing in an offset direction of the outer plate section and a second surface opposite to the first surface, the bush hole penetrates from the first surface to the second surface, and the inner plate section includes a thick part protruding in the axial direction around the bush hole on the second surface.

In this configuration, the provision of the thick part can increase the stiffness of the offset plate. Therefore, when the chain is driven and a tensile force acts on the offset plate, the offset plate can be kept from bending.

In the offset plate, the thick part may include an annular protrusion protruding around the bush hole. In this configuration, the stiffness can be increased along the entire periphery of the bush hole.

In the offset plate, the thick part may include a plurality of ribs extending radially outward from a periphery of the bush hole. In this configuration, the provision of the ribs can increase the stiffness in and around the bush hole.

In the offset plate, the ribs may include a pair of ribs extending from the bush hole in opposite directions along the pitch line.

This configuration can include the ribs that efficiently endure against the bending of the offset plate caused by the tensile forces occurring when the chain is driven.

It may be appreciated that in the offset plate, the inner plate section has a first surface facing in an offset direction of the outer plate section and a second surface opposite to the first surface, the bush hole penetrates from the first surface to the second surface, and the inner plate section includes, on the first surface, a surrounding wall defining an annular recess around the bush hole; a protrusion protruding on the annular recess from a periphery of the bush hole in the axial direction; and an annular groove defined between the surrounding wall and the protrusion.

In this configuration, the provision of the recess and the groove can ensure a space for receiving the sealing member encapsulating the lubricant between the pin and the bush. Further, the provision of the protrusion on the periphery of the bush hole can enhance the stiffness of preventing the inner plate section from bending, and increases the thickness in the axial direction, giving rise to the advantageous effect of increasing the fitting dimension of the bush.

A joint link according to another aspect of the present invention includes: a first offset plate and a second offset plate each being any one of the offset plates described above; a pin to be press-fitted in the pin hole; a first bush to be press-fitted in the bush hole and a second bush to be arranged around the pin; a first roller to be arranged around the first bush and a second roller to be arranged around the second bush; and an inner link including a pair of inner plates connected by a connector, wherein the first offset plate and the second offset plate are arranged opposite to each other, respective offset directions of the outer plate sections being opposite to each other, one end of the inner link is arranged between the pair of outer plate sections, and the pin passes through the pair of outer plate sections and the inner link, the second bush constitutes a part of the connector of the inner link, and the second roller is arranged between the pair of inner plates.

In this configuration, the stress concentration in the section joining the outer plate section and the inner plate section in the offset plate can be suppressed, thereby keeping a fracture from occurring in or near the offset section. Consequently, an early fracture of an endless chain made by connecting opposite ends of a linear chain via a joint link can be suppressed.

According the present invention described above, an offset plate that can prevent an early fracture and a joint link for chain utilizing the offset plate can be provided.

This application is based on Japanese Patent application No. 2024-182055 filed in Japan Patent Office on October 17, 2024, the contents of which are hereby incorporated by reference.

Although the present invention has been fully described by way of example with reference to the accompanying drawings, it is to be understood that various changes and modifications will be apparent to those skilled in the art. Therefore, unless otherwise such changes and modifications depart from the scope of the present invention hereinafter defined, they should be construed as being included therein.

### Explanation of Reference Numerals

- 1:: sealed chain (chain)
- 10:: chain body (linear chain)
- 2:: offset joint link (joint link)
- 3:: offset plate
- 3A, 3B:: first offset plate, second offset plate
- 301:: parallel line portion
- 302:: arc portion
- 31:: outer plate section
- 32:: inner plate section
- 33:: offset section
- 34:: pin hole
- 35:: bush hole
- 36:: seal seat
- 361:: surrounding wall
- 362:: protrusion
- 363:: seal groove (annular groove)
- 37:: annular protrusion (thick part)
- 371, 372, 373, 374:: first rib, second rib, third rib, fourth rib
- 41:: joint pin (pin)
- 42:: first bush
- 43, 44:: second bush, third bush (connectors)
- 45, 46, 47:: first roller, second roller, third roller
- 48:: sealing member
- 5:: joint inner link (inner link)
- 51:: inner plate
- AX:: axial direction
- TP:: chain pitch direction
- TW:: chain width direction
- PL:: pitch line
- P1, P2:: first surface, second surface
- Oa:: center of pin hole
- Ob:: center of bush hole

## Claims

1. An offset plate (3) for use in a joint link (2) connecting opposite ends of a linear chain (1) to make an endless chain, comprising:
an outer plate section (31) including a pin hole (34) to be press-fitted with a pin (41);
an inner plate section (32) including a bush hole (35) to be press-fitted with a bush (42); and
an offset section (33) joining the outer plate section (31) and the inner plate section (32) in an offset in an axial direction (AX) of the pin hole (34) and the bush hole (35), wherein
the offset plate (3) has an outline including a pair of parallel line portions (301) extending in parallel to a pitch line (PL) connecting a center (Oa) of the pin hole (34) and a center (Ob) of the bush hole (35), the pitch line (PL) being between the pair of parallel line portions (301) in view of the axial direction (AX), and
the pair of parallel line portions (301) reach through the offset section (33) to at least a part of each of the outer plate section (31) and the inner plate section (32).

2. The offset plate (3) according to claim 1, wherein
the offset plate (3) has a shape having a longitudinal direction on an extension direction of the pitch line (PL), further comprising:
an arc portion (302) at each of longitudinally opposite ends thereof, wherein
the pair of parallel line portions (301) extend over the outer plate section (31), the offset section (33), and the inner plate section (32), excluding the arc portions (302).

3. The offset plate (3) according to claim 1, wherein
the inner plate section (32) has a first surface (P1) facing in an offset direction of the outer plate section (31) and a second surface (P2) opposite to the first surface (P1),
the bush hole (35) penetrates from the first surface (P1) to the second surface (P2), and
the inner plate section (32) includes a thick part (37) protruding in the axial direction around the bush hole (35) on the second surface (P2).

4. The offset plate (3) according to claim 3, wherein
the thick part (37) includes an annular protrusion protruding around the bush hole (35).

5. The offset plate (3) according to claim 3, wherein
the thick part (37) includes a plurality of ribs (371,372,373,374) extending radially outward from a periphery of the bush hole (35).

6. The offset plate according to claim 5, wherein
the ribs (371,372,373,374) include a pair of ribs (371,372) extending from the bush hole (35) in opposite directions along the pitch line (PL).

7. The offset plate (3) according to claim 1, wherein
the inner plate section (32) has a first surface (P1) facing in an offset direction of the outer plate section (31) and a second surface (P2) opposite to the first surface (P1),
the bush hole (35) penetrates from the first surface (P1) to the second surface (P2), and
the inner plate section (31) includes, on the first surface (P1),
a surrounding wall (361) defining an annular recess around the bush hole (35);
a protrusion (362) protruding on the annular recess (363) from a periphery of the bush hole (35) in the axial direction (AX); and
an annular groove (363) defined between the surrounding wall (361) and the protrusion (362).

8. A joint link (2), comprising:
a first offset plate (3A) and a second offset plate (3B) each being an offset plate (3) according to any one of the claims 1 to 7;
a pin (41) to be press-fitted in the pin hole (34);
a first bush (42) to be press-fitted in the bush hole (35) and a second bush (43) to be arranged around the pin (41);
a first roller (45) to be arranged around the first bush (42) and a second roller (46) to be arranged around the second bush (43); and
an inner link (5) including a pair of inner plates (51) connected by a connector (43,44),
wherein the first offset plate (3A) and the second offset plate (3B) are arranged opposite to each other, respective offset directions of the outer plate sections (31, 31) being opposite to each other,
one end of the inner link (5) is arranged between the pair of outer plate sections (31, 31), and
the pin (41) passes through the pair of outer plate sections (31, 31) and the inner link (5), the second bush (43) constitutes a part of the connector (43,44) of the inner link (5), and the second roller (46) is arranged between the pair of inner plates (51).
